# DEMANDE DE BREVET EUROPEEN

(11) **EP 4 148 085 A1**
(43) Date de publication de la demande: **15.03.2023**
(21) Numéro de dépôt: 22191054.0
(22) Date de dépôt: 18.08.2022
(51) Int. Cl.: C08H 99/00, C08L 99/00

(54) **PROCEDE DE BLANCHIMENT ET DE DESODORISATION D'ALGUES OU D'EXTRAITS D'ALGUES**

(30) Priorité: 14.09.2021 FR 2109640
(71) Demandeur: Eranova, 13008 Marseille (FR)
(72) Inventeur: HEULS, Maëlie, 13008 MARSEILLE (FR); GERNIGON, Vincent, 13008 MARSEILLE (FR); LAVOISIER, Philippe, 13008 MARSEILLE (FR)
(74) Mandataire: Cabinet Le Guen Maillet

(57) **Abrégé**

La présente invention concerne un procédé de blanchiment et de désodorisation d'algues ou d'extraits d'algues, en vue de leurs utilisations dans la fabrication de plastiques ou composites. Le procédé selon l'invention comprend les étapes suivantes :
(a) une étape d'obtention d'algues ou d'extraits d'algues,
(b) une étape de préparation d'une solution de blanchiment et de désodorisation comprenant du peroxyde d'hydrogène et de l'eau,
(c) une étape de trempage des algues ou des extraits d'algues, dans ladite solution de blanchiment et de désodorisation, durant au moins 2H soit, sous exposition à une lumière naturelle ou artificielle soit, sans exposition à une lumière naturelle ou artificielle,
(d) une étape de séparation des algues ou des extraits d'algues, encore humides, et de la solution de décoloration,
(e) une étape de séchage au cours de laquelle les algues ou extraits d'algues, encore humides, sont soumis à une température comprise entre 40 et 80°C.
(f) éventuellement, si l'étape (c) de trempage s'est déroulée sans exposition à une lumière naturelle ou artificielle, une étape d'exposition aux UV-C avant ou pendant l'étape (e) de séchage,
(g) une étape de récupération d'algues ou d'extraits d'algues, blanchies, désodorisées et séchées.

## Description

La présente invention concerne un procédé de blanchiment et de désodorisation d'algues, ou d'extraits d'algues. Plus précisément, l'invention concerne un procédé de blanchiment et de désodorisation d'algues, ou d'extraits d'algues, en vue de leurs utilisations dans la fabrication de plastiques ou composites.

La demande accrue en matières plastiques imposée par la société moderne engendre des niveaux annuels de production qui atteignent des millions de tonnes. La production de produits en plastiques repose sur un stock limité de matières premières fossiles (pétrole et gaz), qui constituent plus de 90% de sa matière première. La matière plastique est l'une des matières les plus polluantes et dangereuses pour l'environnement, les humains et les animaux. A titre d'exemple, sur les 8,3 milliards de tonnes de matières plastiques fabriquées entre 1950 et 2015, 6,3 milliards de tonnes sont devenues des déchets, dont environ 79% se sont accumulées dans des décharges ou dans la nature. En outre, la fabrication de la matière plastique est elle-même un facteur de pollution car elle génère des sous-produits polluants.

Si aujourd'hui, imaginer un monde sans plastique est presque impossible, une réflexion raisonnée sur les modes de production est nécessaire pour limiter l'impact des plastiques sur notre environnement.

Ainsi, compte tenu de la prise de conscience des consommateurs et des industriels, les recherches se sont orientées depuis plusieurs années vers l'utilisation de matières végétales, renouvelables et idéalement biodégradables, pour remplacer les matières premières fossiles dans la fabrication du plastique. Un tel plastique est alors dit « biosourcé ». Une grande majorité des plastiques biosourcés sont fabriqués à partir de matières végétales issues de blé, de maïs, de betterave, de canne à sucre ou de pomme de terre. Si cette alternative propose des plastiques plus respectueux de l'environnement, elle a pour inconvénient de détourner une partie de la production végétale initialement prévue pour la consommation alimentaire.

Ainsi, plus récemment, les algues ont fait l'objet d'études et de recherches en tant que matières premières ou sources de matières premières dans la fabrication de plastiques. En effet, les algues synthétisent une grande quantité de composés, en particulier des polysaccharides, qui présentent des propriétés fonctionnelles intéressantes pour la fabrication de produits plastiques et qui peuvent être extraits dans ce but. On citera par exemple les ulvanes, l'agar, les alginates, ainsi que l'acide lactique. De plus, les produits plastiques ainsi fabriqués sont biodégradables et compostables. Par ailleurs, l'utilisation des algues dans la fabrication de matière plastique répond à un autre problème environnemental : la prolifération des algues sur les côtes et sa dangerosité.

Les algues vertes, par exemple, sont présentes dans la mer à l'état naturel mais leur prolifération rapide est liée à des dérèglements de l'environnement, tels que la pollution des sols par les nitrates et phosphates, le réchauffement climatique, etc. Ce déséquilibre représente un danger pour l'homme et pour les écosystèmes. La croissance excessive des algues peut être la source de phénomènes épisodiques ou chroniques d'anoxie du milieu et d'étouffement puis de mort de nombreuses espèces. Echouées en forte épaisseur et non collectées, leur décomposition se trouve favorisée et provoque l'émission et l'accumulation de gaz à effet de serre, mais également de sulfure d'hydrogène, un gaz toxique pouvant être mortel en cas de forte concentration. Non collectées et non valorisées, elles représentent un danger pour l'homme et pour l'environnement.

Donner une valeur à ces déchets permet de réduire l'impact environnemental associé aux algues d'échouages.

L'utilisation d'algues ou extraits d'algues dans la fabrication de matières plastiques permet ainsi de répondre à une double problématique : d'un côté l'augmentation de la demande en plastique en limitant le recourt aux matières pétro-sourcées et aux matières végétales entrant en concurrence avec les terres agricoles et de l'autre, la pollution des algues dangereuses pour l'homme et l'environnement si elles ne sont pas traitées.

La fabrication de matières plastiques à partir d'algues est par exemple décrite dans la demande internationale WO 2017/046356.

Cependant, si les algues ou les extraits d'algues conviennent parfaitement à l'élaboration de matières plastiques et de produits plastiques finis présentant des propriétés mécaniques au moins identiques à celles des plastiques standards, un inconvénient demeure du fait des caractéristiques de couleurs et d'odeurs qu'elles induisent. Or, les industriels sont en attente de produits finis peu ou pas colorés et sans odeur caractéristique d'algues.

Le but de la présente invention est de proposer un procédé simple, efficace et respectueux de l'environnement, pour le blanchiment et la désodorisation d'algues ou d'extraits d'algues, notamment en vue de leurs utilisations dans la fabrication de matières plastiques ou composites pour l'élaboration de produits finis sans couleur et sans odeur.

A cet effet l'invention concerne un procédé de blanchiment et de désodorisation d'algues ou d'extraits d'algues, comprenant les étapes suivantes :
(a) une étape d'obtention d'algues ou d'extraits d'algues,
(b) une étape de préparation d'une solution de blanchiment et de désodorisation comprenant du peroxyde d'hydrogène et de l'eau,
(c) une étape de trempage des algues ou des extraits d'algues dans ladite solution de blanchiment et de désodorisation, durant au moins 2H soit, sous exposition à une lumière naturelle ou artificielle soit, sans exposition à une lumière naturelle ou artificielle,
(d) une étape de séparation des algues ou des extraits d'algues, encore humides, et de la solution de décoloration,
(e) une étape de séchage au cours de laquelle les algues ou extraits d'algues, encore humides, sont soumis à une température comprise entre 40 et 80°C.
(f) éventuellement, si l'étape (c) de trempage s'est déroulée sans exposition à une lumière naturelle ou artificielle, une étape d'exposition aux UV-C avant ou pendant l'étape (e) de séchage,
(g) une étape de récupération d'algues ou d'extraits d'algues, blanchies, désodorisées et séchées.

Dans le cadre du procédé selon l'invention, c'est l'action combinée du peroxyde d'hydrogène et de la lumière ou du chauffage à une certaine plage de températures qui permet le blanchiment et la désodorisation des algues ou extraits d'algues. A titre de comparaison, l'action seule du peroxyde d'hydrogène ne permet pas d'obtenir un tel résultat, de manière satisfaisante. Cette action combinée peut être mise en œuvre soit en une seule étape, par trempage dans du peroxyde d'hydrogène sous exposition lumineuse soit, en deux étapes séparées dont une étape de trempage dans du peroxyde d'hydrogène et une étape ultérieure d'exposition aux UV-C ou de chauffage à une certaine plage de températures.

Ainsi, de manière plus détaillée, le procédé selon une première alternative comprend les étapes suivantes :
(a) une étape d'obtention d'algues ou d'extraits d'algues,
(b) une étape de préparation d'une solution de blanchiment et de désodorisation comprenant du peroxyde d'hydrogène et de l'eau,
(c) une étape de trempage des algues ou des extraits d'algues dans ladite solution de blanchiment et de désodorisation, sous lumière naturelle ou artificielle, durant au moins 2H,
(d) une étape de séparation des algues ou des extraits d'algues, encore humides et de la solution de décoloration,
(e) une étape de séchage au cours de laquelle les algues ou extraits d'algues, encore humides, sont soumis à une température comprise entre 40 et 80°C.
(g) une étape de récupération d'algues ou d'extraits d'algues, blanchies, désodorisées et séchées.

Le procédé selon une seconde alternative comprend les étapes suivantes :
(a) une étape d'obtention d'algues ou d'extraits d'algues,
(b) une étape de préparation d'une solution de blanchiment et de désodorisation comprenant du peroxyde d'hydrogène et de l'eau,
(c) une étape de trempage des algues, ou des extraits d'algues, dans ladite solution de blanchiment et de désodorisation, durant au moins 2H,
(d) une étape de séparation des algues ou des extraits d'algues, encore humides et de la solution de décoloration,
(e) une étape de séchage au cours de laquelle les algues, ou extraits d'algues, encore humides, sont soumis à une température comprise entre 40 et 80°C.
(f) éventuellement une étape au cours de laquelle les algues ou extraits d'algues, encore humides, sont soumis à une exposition aux UV-C avant ou pendant l'étape (e) de séchage,
(g) une étape de récupération d'algues ou d'extraits d'algues, blanchies, désodorisées et séchées.

L'état d'avancement du blanchiment peut être suivi visuellement à l'aide d'un nuancier ou par spectrométrie. Ainsi, à l'issue du procédé selon l'invention, quelles que soient les alternatives, les algues ou extraits d'algues sont aptes à être utilisés dans la fabrication de matières plastiques ou composites sans couleur, blanchies et non odorantes. Le procédé peut être mis en œuvre à partir de toutes espèces d'algues, filamentaires ou sous forme de feuilles, algues vertes, brunes ou rouges, etc., sur des algues entières ou broyées, fraiches ou sèches, ou sur des extraits d'algues.

Par ailleurs, le peroxyde d'hydrogène étant non rémanent et se décomposant rapidement en oxygène, les effluents récupérés après contact avec la matrice peuvent être envoyés vers une zone de lagunage sans traitement spécifique avant recyclage ou rejet dans la nature. Le procédé selon l'invention est donc parfaitement respectueux de l'environnement.

Dans le contexte de l'invention, on entend par « extrait d'algues », tout composé, ou mélange de composés, obtenu après la mise en œuvre de tout procédé d'extraction connu de l'homme du métier. Il s'agira en particulier d'extraits de polysaccharides ou de fibres. Les polysaccharides et les fibres issus d'algues sont connus et leur origine algale est identifiable.

On entend également par « lumière naturelle » l'ensemble des différentes formes de lumière émises par le soleil ou la lune.

On entend également par « lumière artificielle » l'ensemble des différentes formes de lumière produites artificiellement et diffusées par une lampe ou toute autre source lumineuse artificielle.

On entend également par « blanchiment », la perte de la couleur naturelle de la matière, par neutralisation, élimination ou destruction des composés responsables de la couleur, notamment des pigments. Le terme « décoloration » peut être utilisé de manière alternative.

On entend également par « désodorisation», la perte de l'odeur naturelle de la matière, par neutralisation, élimination ou destruction des composés responsables de l'odeur.

Selon une caractéristique de l'invention, au cours de l'étape (b), la solution de blanchiment et de désodorisation est préparée avec de l'eau de mer, de l'eau douce ou de l'eau saumâtre.

Selon un mode de réalisation préféré, la solution de blanchiment et de désodorisation est préparée avec de l'eau de mer.

En effet, de manière inattendue, l'action combinée du peroxyde d'hydrogène et de l'eau de mer permet d'obtenir un blanchiment et une désodorisation de manière plus rapide et plus efficace.

Préférentiellement, la solution de décoloration est préparée à une concentration volumique de 0,01 à 20% de peroxyde d'hydrogène.

Préférentiellement encore, l'étape (b) de préparation d'une solution de blanchiment et de désodorisation comprend le réglage du pH de ladite solution à une valeur comprise entre 7 et 11,5, plus préférentiellement 7.

Le pH de l'eau douce ou de mer aux alentours de 7 est adapté, mais une modification du pH entre 11 et 11,5 par exemple par ajout d'hydroxyde de sodium peut être envisagée.

Selon un mode de réalisation, le procédé comprend l'ajout, durant l'étape (b), d'au moins un composé choisi parmi le sulfate de fer, le silicate de métal alcalin, un alcalino-terreux, un agent complexant des ions alcalino-terreux, ou l'un de leur mélange dans la solution de blanchiment et de désodorisation.

L'ajout de tels composants permet d'accélérer la vitesse des réactions de blanchiment et de désodorisation en favorisant l'oxydation du peroxyde d'hydrogène. Cependant, de tels ajouts restent totalement optionnels.

Avantageusement, l'étape de trempage (c) des algues ou des extraits d'algues, dans la solution de blanchiment et de désodorisation, se déroule durant au moins 8H, préférentiellement au moins 12H, plus préférentiellement au moins 24 H.

Il est entendu qu'en fonction de la quantité de matière à décolorer, l'homme du métier saura sans difficultés déterminer la durée de trempage nécessaire à l'obtention du blanchiment et de la désodorisation.

Le trempage est réalisé en continu ou en discontinu par mélange intime de la solution de blanchiment et de désodorisation avec les algues ou extraits d'algues. Le mélange intime peut être effectué dans des bassins de culture d'algues en extérieur comme des raceways de 5m3, 65m3 et 150m3 ou dans des cuves agitées contrôlées.

Selon un mode de réalisation préféré de l'invention, l'étape de trempage (c) se déroule sous exposition lumineuse, plus précisément sous lumière naturelle du jour en extérieur, sous lumière artificielle produite par des LEDs, ou sous lumière artificielle combinant LED et UV-C.

Les LEDs, light emitting diodes, ou encore diodes électroluminescentes préférentiellement utilisées sont celles qui émettent des longueurs d'onde comprises entre 400 nm et 700 nm.

Avantageusement encore, l'étape (c) de trempage se déroule sous chauffage à une température comprise entre 70 et 95°C.

Le chauffage durant l'étape de trempage, avec exposition sous lumière, permet d'accélérer plus encore les réactions de décoloration et de désodorisation. Lorsque l'étape de trempage a lieu sans exposition lumineuse, le chauffage pourrait être nécessaire en cas de faible concentration en peroxyde d'hydrogène.

Avantageusement, l'étape de trempage (c) se déroule selon un rapport de 20 à 60 g d'algues ou d'extraits d'algues, par litre de solution de blanchiment et de désodorisation.

Préférentiellement, l'étape de trempage (c) se déroule sous agitation mécanique sans bullage.

L'agitation joue un rôle sur la cinétique et favorise la décoloration et la désodorisation. Elle doit être réalisée par agitation mécanique sans bullage, le bullage étant un frein au blanchiment.

Selon un mode de réalisation, l'étape (c) de trempage se déroule à une température comprise entre 70 et 95°C, préférentiellement à la fois sous lumière naturelle ou artificielle et à une température comprise entre 70 et 95°C.

Préférentiellement, l'étape de séparation (d) consiste en de la filtration.

Préférentiellement, l'étape (e) d'exposition à une température comprise entre 40 et 80°C est effectuée en étuve contrôlée.

Selon un mode de réalisation, le procédé comprend une étape de contact des algues ou extraits d'algues, avec de l'ozone, avant ou pendant l'étape de trempage.

L'invention concerne encore des algues ou extraits d'algues, blanchis et désodorisés, obtenus ou susceptibles d'être obtenus par un procédé tel que décrit précédemment.

L'invention concerne encore une matière plastique ou composite comprenant des algues ou extraits d'algues, blanchis et désodorisés, obtenus ou susceptibles d'être obtenus par un procédé tel que décrit précédemment.

L'invention concerne encore un procédé de fabrication de produits finis plastiques ou composites comprenant un procédé tel que décrit précédemment.

L'invention concerne enfin un produit fini plastique ou composite comprenant des algues ou extraits d'algues, blanchis et désodorisés, obtenus ou susceptibles d'être obtenus par un procédé tel que décrit précédemment.

Un produit fini plastique ou composite désigne ici tout objet fabriqué à partir de matières plastiques ou composites, telles qu'un contenant, un sac, un film...

Les caractéristiques de l'invention mentionnées ci-dessus, ainsi que d'autres, apparaîtront plus clairement à la lecture de la description suivante d'exemples de réalisation qui illustrent non-limitativement l'invention.

### Exemple 1

Dans un bêcher de contenance de 1 L, mélanger 498mL d'eau de mer et 2 mL de peroxyde d'hydrogène à 35% d'oxygène actif de manière à obtenir une solution de blanchiment et de désodorisation. Ajouter ensuite 10g d'algues fraiches Ulva Rigida, agiter magnétiquement, sans bullage, et placer un bandeau LED autour du bêcher.

Le blanchiment, mesuré à l'aide d'un nuancier et la désodorisation des algues sont observés en moins de 24h.

Les algues sont ensuite filtrées.

### Exemple 2

Dans un bassin dit « raceway » d'une contenance de 5m3, remplir d'eau de mer puis ajouter 0,5% v/v de peroxyde d'hydrogène 35% d'oxygène actif de manière à obtenir une solution de blanchiment et de désodorisation. Ajouter ensuite des algues type Ulva Rigida de façon à obtenir une concentration en algues de 20 kg fraiches (20% de MS) / m3 de solution de blanchiment et de désodorisation. Exposer, sous agitation mécanique (type roue à aube), à l'extérieur sous la lumière naturelle, en plein été, durant 5 jours au maximum.

Le blanchiment mesuré à l'aide d'un nuancier et la désodorisation des algues sont observés en moins de 5 jours.

Une fois le blanchiment et la désodorisation atteints, les algues sont récoltées sur une grille courbe puis essorées, séchées et broyées.

### Exemple 3

Dans un bécher de 1 L, ajouter 498mL d'eau de mer puis 2 mL de peroxyde d'hydrogène à 35% d'oxygène actif de manière à obtenir une solution de blanchiment et de désodorisation. Ajouter 10g d'algues fraiches type Ulva Rigida, agiter magnétiquement et placer le bécher sur une plaque chauffante réglée à 70°C. Attendre 24h, sortir les algues, les essorer puis les étaler en étuve à 60°C pendant 24h.

## Revendications

1. Procédé de blanchiment et de désodorisation d'algues ou d'extraits d'algues, comprenant les étapes suivantes :
(a) une étape d'obtention d'algues ou d'extraits d'algues,
(b) une étape de préparation d'une solution de blanchiment et de désodorisation comprenant du peroxyde d'hydrogène et de l'eau,
(c) une étape de trempage des algues ou des extraits d'algues, dans ladite solution de blanchiment et de désodorisation, durant au moins 2H soit, sous exposition à une lumière naturelle ou artificielle soit, sans exposition à une lumière naturelle ou artificielle,
(d) une étape de séparation des algues ou des extraits d'algues, encore humides, et de la solution de décoloration,
(e) une étape de séchage au cours de laquelle les algues ou extraits d'algues, encore humides, sont soumis à une température comprise entre 40 et 80°C.
(f) éventuellement, si l'étape (c) de trempage s'est déroulée sans exposition à une lumière naturelle ou artificielle, une étape d'exposition aux UV-C avant ou pendant l'étape (e) de séchage,
(g) une étape de récupération d'algues ou d'extraits d'algues, blanchies, désodorisées et séchées.

2. Procédé selon la revendication 1, **caractérisé en ce que** la solution de décoloration est préparée à une concentration volumique de 0,01 à 20% de peroxyde d'hydrogène.

3. Procédé selon la revendication 1 ou 2, **caractérisé en ce que** la solution de blanchiment et de désodorisation est préparée avec de l'eau douce, de l'eau de mer ou de l'eau saumâtre, préférentiellement de l'eau de mer.

4. Procédé selon l'une des revendications précédentes, **caractérisé en ce que** l'étape (b) de préparation d'une solution de blanchiment et de désodorisation comprend le réglage du pH de ladite solution à une valeur comprise entre 7 et 11,5, plus préférentiellement 7.

5. Procédé selon l'une des revendications précédentes, **caractérisé en ce qu'**il comprend l'ajout, durant la préparation de la solution de blanchiment et de désodorisation et dans celle-ci, d'au moins un composé choisi parmi le sulfate de fer, le silicate de métal alcalin, un alcalino-terreux, un agent complexant des ions alcalino-terreux, ou l'un de leur mélange.

6. Procédé selon l'une des revendications précédentes, **caractérisé en ce que** ladite étape (c) de trempage des algues ou des extraits d'algues, dans ladite solution de blanchiment et de désodorisation, se déroule durant au moins 8H, préférentiellement au moins 12H, plus préférentiellement au moins 24 H.

7. Procédé selon l'une des revendications précédentes, **caractérisé en ce que** l'étape (c) de trempage se déroule sous lumière naturelle ou artificielle, ladite lumière étant choisie parmi la lumière naturelle du jour en extérieur, sous lumière artificielle produite par des LEDs, ou sous lumière artificielle combinant LED et UV-C.

8. Procédé selon l'une des revendications précédentes, **caractérisé en ce que** l'étape (c) de trempage se déroule selon un rapport de 20 à 60 g d'algues ou d'extraits d'algues, par litre de solution de blanchiment et désodorisation.

9. Procédé selon l'une des revendications précédentes, **caractérisé en ce que** l'étape (c) de trempage se déroule sous agitation mécanique sans bullage.

10. Procédé selon l'une des revendications précédentes, **caractérisé en ce que** l'étape (c) de trempage se déroule à une température comprise entre 70 et 95°C, préférentiellement à la fois sous lumière naturelle ou artificielle et à une température comprise entre 70 et 95°C.

11. Procédé selon l'une des revendications précédentes, **caractérisé en ce que** l'étape (d) de séparation consiste en de la filtration.

12. Procédé selon l'une des revendications précédentes, **caractérisé en ce que** l'étape (e) d'exposition à une température comprise entre 40 et 80°C est effectuée en étuve contrôlée.

13. Procédé selon l'une des revendications précédentes, **caractérisé en ce qu'**il comprend une étape de contact des algues ou extraits d'algues, avec de l'ozone, avant ou pendant l'étape (c) de trempage.

14. Algues ou extraits d'algues, blanchis et désodorisés, obtenus ou susceptibles d'être obtenus par un procédé selon l'une des revendications 1 à 13.

15. Matières plastiques ou composites comprenant des algues ou extraits d'algues, blanchis et désodorisés, obtenus ou susceptibles d'être obtenus par un procédé selon l'une des revendications 1 à 13.

16. Procédé de fabrication de produits finis plastiques ou composites comprenant un procédé selon l'une des revendications 1 à 13.

17. Produit fini ou composite comprenant des algues ou extraits d'algues, obtenus ou susceptibles d'être obtenus par un procédé selon l'une des revendications 1 à 13.
